# EUROPEAN PATENT APPLICATION

(11) **EP 2 887 757 A1**
(43) Date of publication of application: **24.06.2015**
(21) Application number: 13198083.1
(22) Date of filing: 18.12.2013
(51) Int. Cl.: H04W 88/06, H04W 48/18, H04W 8/18, H04W 76/00, H04W 48/16

(54) **Fast switching of IMSIs due to acquisition and storage of access info for second IMSI while registered with first IMSI**

(71) Applicant: Gemalto M2M GmbH, 81541 München (DE)
(72) Inventor: Simon, Carsten, 16761 Hennigsdorf (DE)
(74) Representative: Grevin, Emmanuel

(57) **Abstract**

The application relates to a mobile device comprising a SIM card with two subscriptions in the form of identity records with differing IMSIs and MSISDNs, e.g. one for commercial use and the other for emergency calls. A conventional mobile device with two subscriptions performs the following steps sequentially: Mobile device deactivates commercial identity, subscription resp. SIM card; abandons the current wireless communication network; activates second identity, subscription resp. SIM card; scans for all accessible technologies (2G, 3G, 4G, ...) and tries to decode wireless communication network and receive PLMN code before registering to the preferred network for the second identity. Due to the fact that before starting to register with the second subscription or identity the mobile device did not maintain any information about the previously used wireless communication network and potential knowledge about accessing other wireless communication networks, this leads to a process which can under certain circumstances have a duration of one minute or more. It is obvious that not only for security or emergency related use cases this delay time is far too long. This problem is solved by the application in that the mobile device, while registered with the first subscription, acquires access information relevant for the second subscription. Hence, when the mobile device activates the second subscription, the network acquisition process can be quicker. The acquisition of network information can be done during small activity gaps such as compressed mode in 3G resp. measurement gaps in 4G for such time slots.

## Description

### Technical field / problem to solve

The invention relates to a mobile device and a method for operation of the mobile device configured to communicate within a wireless communication network where the mobile device is capable of handling a plurality of network related identities.

Said mobile device is configured to change between at least two of the plurality of identities. In certain situations the time for registering to a new wireless communication network with a new identity requires far too much time. This is in particular true for identities that are designed for a commonly accessible network based services like an emergency call service for cars.. Such a mobile device which is designed to support emergency call is part of a car by way of a telematics or emergency call unit. For the emergency call it requires to change the wireless communication network registration from a commercial network identity to an emergency call identity. If this procedure requires one or more seconds delay until the emergency call can be launched this would be critical for performing the service, and therefore to save health and life of the passengers of the car.

### Prior art

To solve that problem presently known approaches require the following steps to be performed. These steps are performed sequentially:
1. Mobile device deactivates commercial identity, subscription resp. SIM card
2. Mobile devices abandons the current wireless communication network
3. Mobile device activates second identity, subscription resp. SIM card
4. Mobile device scans for all accessible technologies (2G, 3G, 4G, ...) all bands for presence of power sufficient for accessing a wireless communication network
5. For those bands / frequencies detected in step 4 mobile device tries to synchronize with wireless communication network
6. For those wireless communication networks detected in step 5 mobile device tries to decode wireless communication network and receive PLMN code
7. Found wireless communication networks are compared to a list of prioritized wireless communication networks stored in the mobile device, in particular in the SIM card, and the detected wireless communication network with highest priority is selected
8. For the selected wireless communication network the technology and frequency used by the wireless communication network is chosen for synchronization of the mobile device and preparation of the registration
9. Mobile device registers to wireless communication network
10.Optionally check if wireless communication network supports desired services, provided it was not detectable in step 7
11. Network based service is initiated, in particular emergency call is executed

Due to the fact that before starting to register with the second subscription or identity the mobile device did not maintain any information about the previously used wireless communication network and potential knowledge about accessing other wireless communication networks, this leads to a process which can under certain circumstances have a duration of one minute or more. It is obvious that not only for security or emergency related use cases this delay time is far too long.

### The invention

It is therefore a goal of present invention to suggest a solution which reduces the required lead time until the mobile device is ready to access the wireless communication network, in particular to use the network based service.

To reach this it is suggested a method for operation of a mobile device for wireless communication according to claim 1. Further to reach the goal it is suggested a mobile device according to claim 11.

It is therefore according to a first aspect of the invention proposed a method for operation of a mobile device for wireless communication, the mobile device comprising wireless communication resources and a storage unit, the method comprising the following steps:
- registering to a first wireless communication network;
- on time period(s) where wireless communication resources are freed from activity on the first wireless communication network, searching for available communication networks capable of supporting a given network based service and acquiring, from detected available wireless communication network, access information for this wireless communication network
- storing at least one indication record representing said acquired access information in said storage unit;
- in response to a trigger for accessing said network based service, abandoning said first wireless communication network, and
- initiating a network acquisition process to a detected wireless communication network capable of supporting a given network based service by using said indication record stored in said storage unit.

The suggested method starts from a mobile device for wireless communication which is a device that is capable of accessing wireless communication networks, hereinafter service compliant wireless communication network. This includes mobile phones or other devices that comprise a wireless communication unit, e.g. emergency call units or telematics resp. navigation system units within cars. Such wireless communication networks according to the invention are cellular networks that are capable of handling wireless communication according to wireless technology standards, in particular GSM, GPRS, EDGE, UMTS, WCDMA, CDMA, LTE or others. It consists at least of a plurality of network nodes, like base stations, NodeBs or eNodeBs, forming network cells.
The mobile device consists at least of certain components which can be incorporated separately or some components which can bear more than one of the described units. It is advantageous that the mobile device comprises wireless communication resources, an application control unit and a storage unit.

Said wireless communication resources are related to a hardware unit that comprises all components for communicating with network nodes of a wireless communication network, hereinafter wireless communication unit. Typically such wireless communication unit is designed as a machine-to-machine (M2M) module which can be incorporated in any device and is controllable by a well defined interface like an AT interface according to the Hayes- command set. An application control unit is part of a mobile device that performs control steps, like a processor. This application control unit can be part of the wireless communication unit, but also an application processor in the mobile device outside of the M2M module.
The wireless communication resources comprise typically a transceiver and a protocol stack, both coupled for communication purposes. The protocol stack is a piece of software running in a baseband processor that provides operating memory and processing power.
A storage unit is any type of permanent storage memory. Typically this is incorporated in the wireless communication unit, but it can also be situated in the mobile device outside of the M2M module. Preferably the mobile device is composed of a machine-to-machine module combined with an application device.
Further it is advantageous to have an identification unit accessible for the mobile device. This is a unit which is capable of storing information regarding network identities of the user. This is usually stored in a secured environment, as it is provided by an integrated circuit card (UICC), in particular an USIM, SIM, solderable SIM, a UIM resp. R-UIM (for CDMA) or in a secured software unit accessible by the wireless communication unit.
It is further advantageous to incorporate said storage unit in the identification unit.

The suggested identification unit is configured to contain a plurality of identity records which are used for registering to at least a wireless communication network. Such identity records include all information regarding network identities. Within the identity record typically information are stored, like an identifier, e.g. an IMSI or an MSISDN. On the side of the wireless communication network a database (HLR) is usually available which stores for each identity at least the allowed/subscribed network based services. Preferably such identity record is designed as a subscription or profile stored on an identification unit, preferably a SIM or the like. As it is foreseen to store at least two identity records, there are different approaches to achieve this, in particular when the identification unit is designed as an UICC, USIM, SIM or similar. In a first approach the identification unit is configured to store more than one identity record. Here it is advantageous to have one identity record e.g. for a commercial use and one other identity record - in particular with differing IMSI and/or MSISDN - for the network based service, in particular security services like emergency call, which are supposed to be available for each user.
In a second approach the mobile device is configured to have access to more than one identification units as such. These identification units are configured to store each at least one identity record. The mobile device is then able to decide which identification unit is for normal use, and which identification unit is for use of the network based service.

It is further assumed that the mobile device is registered to a first wireless communication network by means of one of the plurality of said identity records. With respect to this registration step the mobile device acts like a normal standard compliant device.

According to the suggested method it is a goal to retrieve information for at least one of said service compliant wireless communication networks. A wireless communication network is service compliant if it is capable of supporting a given network based service. Said network based service can be any type of service using wireless communication network related capabilities. A typical example is an emergency service, like defined from the esafety initiative defined by the European Commission (EC), as it requires that the wireless communication network has access to a public safety answering point (PSAP). The PSAP is preferably an authority comprising a call center, where local emergency services can be sent to the location where the emergency situation happened. The network based service is manually or automatically triggered. In case of an emergency service this translates to a manual launch or an automatic detection of an emergency situation, in particular by a crash sensor or detection if an inflation of an airbag.

It is now the goal to retrieve information regarding potential service compliant wireless communication networks. On the one hand such information comprises access information, provided that the wireless communication networks are detectable for the wireless communication unit. On the other hand it needs to be determined if the at least one wireless communication network is capable to support at least one of said network based services. The latter uses preferably local storage means, in particular in the identity record, which indicates which wireless communication networks support which of said network based service.

For the determination of the access information related to the wireless communication networks a scan of the respective frequency ranges for the supported network technologies is conducted. When during the scan a wireless communication network can be identified it is depending upon the technologies tried to retrieve information from the wireless network, in the first place to get identification information like a PLMN code from the network, in an advanced approach, at least for a subset of found wireless communication network, a registration is attempted.
The search for available service compliant wireless communication networks is conducted during time periods, where the wireless communication resources are freed from activity on the first wireless communication network. This assures that no running communication in the first wireless communication network is disturbed by this method step.
If such a service compliant wireless communication network is detected, the relevant access information for accessing this wireless communication network are acquired.

After acquiring said access information said access information are stored by means of said at least one indication record in the storage unit accessible by the mobile device. This indication record preferably indicates which wireless communication networks are capable of providing said network based service or which network based services are provided by which wireless communication networks.
It is further preferable to store additional information with said at least one indication record, such as information concerning the network based service itself, and/or information regarding a timestamp of the acquired access information. Further it is advantageous to check if such access information is already stored. The stored access information is overwritten with received access information when they derive from previously stored access information. Further the timestamps are compared and only then when previously stored access information has reached a certain age, the stored access information is overwritten. Further it is preferred to analyse if previously stored access information relate to a different wireless communication network, different location and/or different cell of said wireless communication network. It is therefore possible and advantageous that this step of acquiring and storing such information is repeated regularly or on event.

Now any type of trigger indicates according to the suggested method the necessity to switch the wireless communication network. It is possible that this trigger is initiated by the application device. In one advantageous embodiment this trigger is an emergency situation detected by a car where the mobile device is incorporated, e.g. an actuation of the airbag, or initiated by the user. In general it is up to the mobile device to define necessity for a certain service and switch of wireless communication networks accordingly, e.g. bulk downloads of maps for navigation systems.
If the switch is triggered the mobile device abandons the current wireless communication network. This can be done by a common deregistration procedure. However this can be disadvantageous as the deregistration procedure takes some time, due to the fact that it requires some data exchange between wireless communication network and mobile device. Therefore a quicker solution would be to simply shut down the communication between the mobile device and the current registered wireless communication network in order to immediately start a registration to the new service compliant wireless communication network. Dependent upon the likelihood for launching the network related service and the urgency it can be decided to use the faster step, or the first one which better complies with behaviour expected by wireless communication networks.
Regardless of how the wireless communication network was abandoned, the mobile device can now initiate a network acquisition process to the detected service compliant wireless communication network by using said stored indication record or one of the plurality of stored indication records. The network acquisition process comprises those steps that are usually attempted to access a certain wireless communication network by means of its network node, that means search of cell, analysis of cell configuration and the like. After this process the mobile device is in a position to provide identity records to the wireless communication network to allow an identification and authentication on the side of the wireless communication network,
Preferably one second identity record of the stored plurality of identity records is also provided for the network acquisition process.
With the included access information the network acquisition can be handled much quicker than a normal network acquisition procedure as described for the known methods. In particular it is not required at the time of triggered wireless communication network change to scan for different wireless communication networks. Furthermore it is not required to find out after certain communication or even a completed network acquisition attempt that in this wireless communication network the network based service is not supported.
Which access information relating to a wireless communication network are stored and used for network acquisition is implementation and wireless technology standard specific. It is preferable to use such information which is helpful for a mobile device to quickly access this wireless communication network. Such access information can comprise at least one of:
- wireless technology, in particular one of the group of GSM, EDGE, GPRS, WCDMA, CDMA, LTE used by accessible wireless communication network
- Frequency and/or band and/or channel (e.g. for CDMA) for access of wireless communication network
- PLMN Code, in particular MCC, MNC and/or area code of accessible wireless communication network, and
- Wireless communication network and/or cell related system information, necessary to physically access the wireless communication network e.g. System Information 3 or 4 in GSM or equivalent System Information blocks in UMTS, including cell identity, cell selection parameters and/or location area identification,
- Priority information for network based service assigned to accessible wireless communication network.

Depending upon the architecture of the wireless communication network and the network based service the network acquisition process can include the identification and authentication process, as well as the registration process as known from wireless technology standards.
After network acquisition process, was successfully completed the network based service can be initiated. This is typically originated by the mobile device, in particular in case of an emergency call, where the emergency call is started from the mobile device. Then after the call is accepted by the PSAP, a minimum set of data (MSD) is provided to the PSAP and after that a voice connection is established.

According to advantageous embodiments of the method the time period used for search for service compliant wireless communication networks can be of different type. According to a first embodiment said time periods are such when the mobile device is in idle mode. During that time the mobile device has free resource to conduct the time consuming search step without disturbing other communication.

According to a second embodiment, said search and acquisition of alternative wireless communication networks can be executed in more than one distinct time periods separated by a break, during which other communication with the first wireless communication network is performed.

That is in particular helpful when the mobile device is in intensive communication with other parties, e.g. during a phone call. Hence slots with reduced communication load can be used to continue the search and acquisition of alternative wireless communication networks. For that it is advantageous to maintain a status of what determination stages were successfully finished and which next stage is to be started once an appropriate slot is available. Further the timestamp of the start of the search and acquisition of alternative wireless communication networks is stored, in order to prevent that data retrieved at the beginning are not up to date anymore.
It is arbitrary how the search and acquisition step is split in different stages. However it is advantageous to define certain frequency ranges, channels or technology specific ranges as one stage. Further if within one slot a stage cannot be completely finished it is started anew within the next available slot. The search and acquisition step is thus finished within a time period after the first time period.

Further it is advantageous if the time periods are communication gaps that are forced by the wireless communication network. One example for such wireless communication network means is the so-called compressed mode in UMTS. Within this compressed mode the wireless communication network forces the mobile device to insert so-called measurement gaps even during an ongoing send and/or reception task, originally in order to check for the availability of other technologies available within the same subscription. Here it is suggested to use these measurement gaps - or respective gaps forced by the wireless communication network in other technologies than UMTS - to check for other wireless communication networks according to the present embodiment of the invention.
In a further advantageous embodiment the compressed mode is activated by the mobile device. It is therefore advantageous in periods with high traffic load that the mobile device itself instructs the wireless communication networks - provided it supports this mode - to activate the compressed mode. With that it is assured that up to date identification information for wireless communication networks supporting the required network related service are available.

According to another preferred embodiment additionally some of said access information can be retrieved from external sources, whereby it does not matter if such information are predetermined during configuration of the mobile device or at least are available in a storage unit. Further it is an option to access during registration to the first wireless communication network an external source interface. From there then such up to date information are retrieved, in particular on request. This request is preferably carrying a certain context, like current wireless communication network, cell, location area, position etc. As a result such externally provided access information portions are stored in the storage unit of the mobile device, which is configured to use these access information for an accelerated network acquisition.

According to a second aspect of the invention it is proposed a mobile device for wireless communication comprising a storage unit, wherein the mobile device is configured to register to a wireless communication network and wherein the mobile device is further configured:
- on time period(s) where wireless communication resources are freed from activity on the first wireless communication network, to search for available service compliant wireless communication networks capable of supporting a given network based service;
- to acquire from detected available service compliant wireless communication network, access information for this service compliant wireless communication network;
- to store at least one indication record representing said acquired access information in said storage unit;
- in response to a trigger for accessing said network based services to abandon said first wireless communication network, and
- to initiate a network acquisition process to a detected service compliant wireless communication network by using said indication record stored in said storage unit.

The mobile device of the second aspect of the present invention shares the advantages achieved with the operating method of the first aspect of the invention.

### Detailed example

The invention will now be described in detail with the accompanying drawing. This description covers only preferred embodiments of the invention, but is not intended to limit the scope of the invention.
- Figure 1: shows a scheme of an exemplary mobile device
- Figure 2: shows the flowchart diagram of an exemplifying process according to prior art
- Figure 3: shows the flowchart diagram for the same process according to the invention.

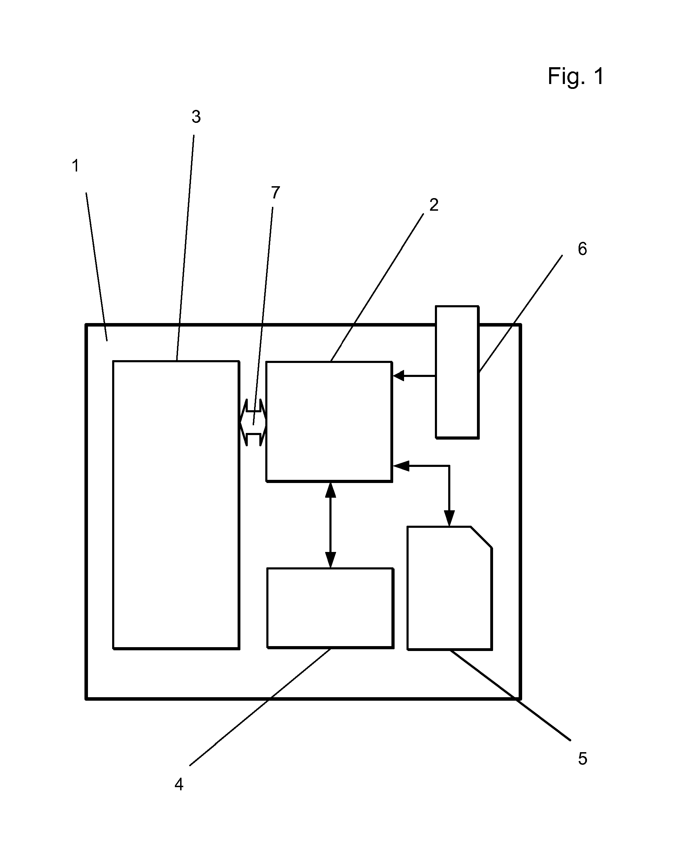

A respective exemplifying device is shown as a scheme in Fig. 1, wherein the components of the mobile device 1 are shown schematically exemplifying separated, however, can be implemented together in one unit or also can be further divided or separated depending on the demands of the instant periphery of the mobile device 1. Also the mobile device 1 is only an example for the hardware or software outlined above.
The mobile device 1 according to the exemplifying scheme comprises the following components: The wireless communication unit 2 is responsible for setting up wireless communication with the wireless communication network, in particular the radio frequency (RF) tasks are executed in this component. Typically such a wireless communication unit 2 is implemented as a so-called M2M (machine-to-machine) or MTC (machine type communication) module. The wireless communication unit provides the wireless communication resources.
Further the mobile device 1 comprises an application control unit 3 which controls all or at least the main activities of the mobile device 1. This is typically a central processing unit, regardless if other auxiliary processors or further components with own processors are available. The application control unit 3 has in this exemplary mobile device 1 access to the wireless communication unit 2 by virtue of an AT-interface 7. Other ways of interfacing the wireless communication unit 2 are of course possible.
Further the mobile device 1 comprises a storage unit 4. This is configured for storing at least a plurality of indication records received through a wireless communication network and that include the required access information for accessing another wireless communication network. It is obvious that other components, in particular the application control unit 3 has access to the storage unit 4 and is allowed to read from and write to the storage unit 4. It is further thinkable that other components like the wireless communication unit 2 has at least limited access to the storage unit 4 as well, as such the read access and the write access in the inventive method are executed by different components.

Further the mobile device 1 comprises an identification unit 5. This identification unit 5 is at least responsible for storing the identity records which is the subscription of the user to one or more wireless communication networks. The identification unit 5 is in this example a SIM-card, which is attached to the mobile device 1 by means of a SIM card slot (not shown), provided it is a removable SIM card. By this way the identification unit 5 is accessible for the wireless communication unit 2. The application control unit 3 has access to the identification unit 5 via the wireless communication unit 2. In preferred embodiments storage unit 4 can be incorporated in identification unit 5 or vice versa. Finally an antenna 6 is part of the mobile device 1. The antenna 6 is typically connected to the mobile device 1 and is accessible for the wireless communication unit 2.

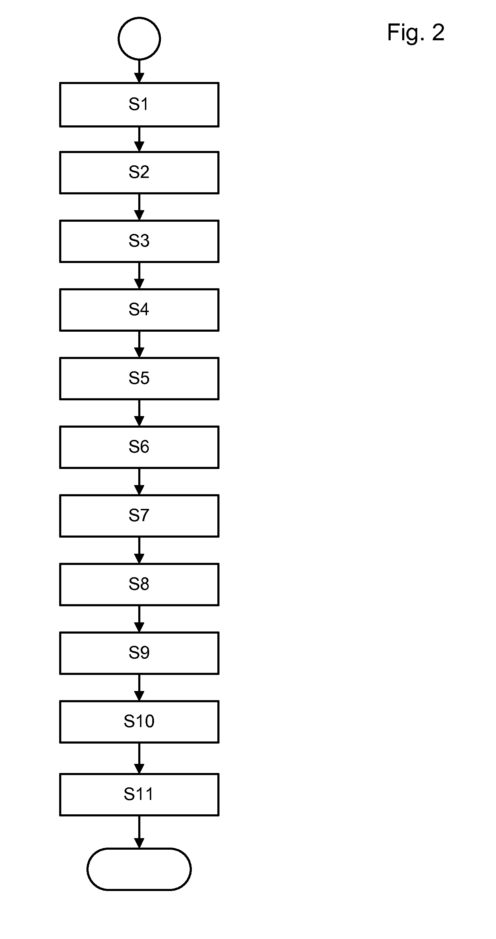

Fig. 2 shows a flow chart for an exemplary mobile device 1 which is capable of setting up an emergency call, which steps are to be taken according to the prior art to execute an emergency call. The flow chart assumes that the mobile device 1 is registered in a wireless communication network which is not capable of accepting emergency calls. The mobile device 1 has therefore upon request for an emergency call to switch to a wireless communication network with the required capabilities. When such an emergency call is triggered e.g. automatically by detecting a crash or an airbag deployment, step S1 is taken. Here the mobile device 1 deactivates its current, usually commercial subscription.
In the next step S2 the mobile device 1 abandons the registration to the current wireless communication network. The abandoning can be done by a common deregistration procedure or by simply ending the communication with the current wireless communication network and move on to the next step S3. Here the mobile device 1 activates a second subscription which is accessible on the identification unit 5. This is typically the emergency call subscription which is free of cost and available for each user even if a commercial subscription is not available (e.g. due to uncharged prepaid account).

Now in step S4 the mobile device 1 scans for all accessible (and supported) technologies like 2G, 3G, 4G etc. and all bands for the presence of power sufficient for accessing and maintaining a communication with a wireless communication network. After this scan a set of frequencies resp. bands is available which can be examined in the next step. If no such band is found, e.g. in an area with no sufficient coverage, the procedure would stop here. Due to the fact that in this exemplifying process it is assumed that at least the previously used wireless communication network is available, here no decision point is drawn in Fig. 2.
Based on the collected frequencies / bands the mobile device 1 picks in step S5 a first one and tries to synchronize with the wireless communication network. This is done for all bands and such it can be figured out to which wireless communication network the mobile device 1 can synchronize. In step S6 the mobile device 1 tries for all wireless communication networks with positive result from step S5 to decode and receive the PLMN code and the area code. These codes are sent from all wireless communication networks on special channels. With these codes the mobile device 1 can distinguish the different wireless communication networks. Further it can in step S7 compare the received information concerning decodable wireless communication networks with a list of prioritized wireless communication networks stored in the mobile device 1, in particular the identification unit 5 resp. the SIM card. By this the mobile device 1 picks one of the decodable wireless communication networks according to said prioritized network list, that is in the first step the wireless communication network with the highest priority.

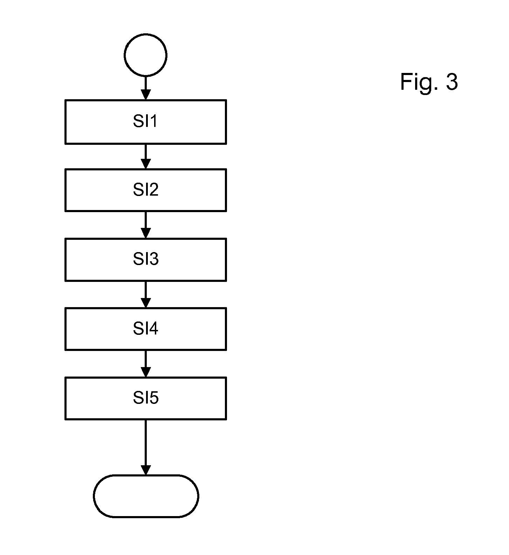

Now in step S8 one of the available technologies and frequencies for the selected wireless communication network is chosen, usually representing the highest technology and the mobile device 1 now prepares for network acquisition of this wireless communication network. The network acquisition is performed in step S9. Optionally it can now be checked if the registered wireless communication network supports the desired service, if this information is not already available (e.g. in the prioritized list used in step S7). This requires wireless communication network related communication regarding the available services. For this preferably a request is sent to the wireless communication network and it has to be waited for a response. It is also possible that through a channel, e.g. incorporating system information blocks, those information are made available by the wireless communication network without requesting.
If the wireless communication network is capable of supporting emergency call service then in step S11 the emergency call is initiated, that is a call is setup to the emergency call public safety access point public safety answer point (PSAP).
The description of the prior art process to launch an emergency call shows how disadvantageous the currently known process is. The disadvantages of the known process are mitigated through the inventive method. Here the steps necessary to be executed in order to launch an emergency call are shown in Fig. 3. This is based on the mobile device 1 already registered to a wireless communication network.
According to the invention the mobile device 1 performed during time periods, where the wireless communication resources are freed from activity, a search for available service compliant wireless communication networks. If those wireless communication networks are detected, access information for accessing these wireless communication networks are acquired. Based on these information indication records representing said acquired access information are created. These indication records are stored in the storage unit 4 of the mobile device 1.
This search and acquisition process can in particular be executed in time periods separated by breaks, whereby one complete search and acquisition process ends in different time period from that time period where the search and acquisition process started.

Now the emergency call is triggered like described above automatically or manually. First in step SI1 the current identity or subscription is deactivated. In the next step SI2 the mobile device 1 abandons the registration to the currently used wireless communication network. This can be done like in the known process described above. Unlike steps S4 to S8 in Fig. 2 it is according to the inventive method not required to find an appropriate wireless communication network. Instead the stored indication records are read from storage unit 4 (step SI3). It does not matter if these indication records are read by application control unit 3 or the wireless communication unit 2. The more information are available in the indication record the less steps are required to then conduct a network acquisition in step SI4 to the selected wireless communication network.
After the network acquisition step SI4 concluded now in step SI5 the network based service - here: the emergency call - can then be launched in the now attached wireless communication network.
The time consuming step of detecting which wireless communication network is available and capable of supporting the desired network based service and how to access this wireless communication network is decoupled from the step of accessing the network based service, and thus the network based service can be started without material delay.

### Reference number list

- 1: Mobile device
- 2: Wireless communication unit
- 3: Application control unit
- 4: Storage unit
- 5: Identification unit
- 6: Antenna
- 7: AT-Interface

## Claims

1. Method for operation of a mobile device (1) for wireless communication, the mobile device (1) comprising wireless communication resources and a storage unit (4),
the method comprising the following steps:
- registering to a first wireless communication network;
- on time period(s) where wireless communication resources are freed from activity on the first wireless communication network, searching for available wireless communication networks capable of supporting a given network based service and acquiring, from detected available wireless communication network, access information for this wireless communication network,
- storing at least one indication record representing said acquired access information in said storage unit (4);
- in response to a trigger for accessing said network based service, abandoning said first wireless communication network, and
- initiating a network acquisition process to a detected wireless communication network capable of supporting a given network based service by using said indication record stored in said storage unit (4).

2. Method according to claim 1, wherein network based service is an emergency service, which is triggered upon a manual or automatic detection of an emergency situation.

3. Method according to claim 1 or 2, wherein time period is a period where the mobile device (1) is in an idle mode.

4. Method according to claim 1 or 2, wherein time periods are periods separated by break(s) during which other communication with the first wireless communication network is performed.

5. Method according to at least one of the claims 1 to 4, wherein the searching and acquisition steps are started in the first time period and finalized within a subsequent time period.

6. Method according to at least one of the claims 1 to 4, wherein said time periods are communication gaps that are forced by the first wireless communication network.

7. Method according to claim 6,
wherein the method comprises for the mobile device (1) the step of sending a specific command to the wireless communication network in order to force said communication gaps.

8. Method according to at least one of the claims 1 to 7, wherein after successful initiating the network acquisition process, a communication related to said network based service is initiated.

9. Method according to at least one of the claims 1 to 8, wherein access information of said indication record comprise at least one of:
- wireless technology, selected from the group consisting of GSM, EDGE, GPRS, WCDMA, CDMA, LTE used by accessible wireless communication network,
- frequency and/or band and/or channel for access of wireless communication network,
- wireless communication network and/or cell related system information,
- PLMN Code, comprising at least one MCC, MNC and/or area code of accessible wireless communication network, and
- priority information for network based service assigned to accessible wireless communication network.

10. Method according to at least one of the claims 1 to 9, wherein said acquisition further comprises
- accessing an external source interface and retrieving from said external source interface additional access information,
- storing such additional access information in a storage unit (4) of the mobile device (1).

11. Mobile device (1) for wireless communication comprising a storage unit (4),
wherein the mobile device (1) is configured to register to a wireless communication network and
wherein the mobile device (1) is further configured
- on time period(s) where wireless communication resources are freed from activity on the first wireless communication network, to search for available wireless communication networks capable of supporting a given network based service;
- to acquire from detected available wireless communication network access information for this wireless communication network;
- to store at least one indication record representing said acquired access information in said storage unit (4);
- in response to a trigger for accessing said network based services to abandon said first wireless communication network, and
- to initiate a network acquisition process to a detected wireless communication network capable of supporting a given network based service by using said indication record stored in said storage unit (4).

12. Mobile device (1) according to claim 11, wherein said time periods are periods separated by break(s) during which the mobile device (1) is configured to perform other communication with the first wireless communication network.

13. Mobile device (1) according to at least one of the claims 11 to 12, configured to start the search and acquisition in the first time period and to finalize within a time period after the first time period.

14. Mobile device (1) according to at least one of the claims 11 to 13, wherein said time periods are communication gaps that are forced by the first wireless communication network, and where the mobile device (1) is configured to send a specific command to the wireless communication network in order to force said communication gaps.

15. Mobile device (1) according to at least one of the claims 11 to 14, configured
- to access an external source interface and retrieve from said external source interface additional access information,
- to store such additional access information in the storage unit (4).
